# EUROPEAN PATENT SPECIFICATION

(11) **EP 0 491 804 B1**
(45) Date of publication and mention of the grant of the patent: **30.06.1993**
(21) Application number: 90913919.8
(22) Date of filing: 12.09.1990
(51) Int. Cl.: G03B 17/24

(54) **MAGNETIC RECORDING ON FILM OF SCENE PARAMETERS AND PHOTOFINISHING PROCESS FOR USE THEREWITH**
MAGNETISCHE AUFZEICHNUNG VON SZENENPARAMETERN AUF FILM UND FOTOLABORVERFAHREN DAZU
ENREGISTREMENT MAGNETIQUE SUR PELLICULE DE PARAMETRES DE SCENES ET PROCEDE DE PHOTO-AFFINAGE ASSOCIES

(30) Priority: 14.09.1989 US 407994
(43) Date of publication of application: 01.07.1992
(73) Proprietor: EASTMAN KODAK COMPANY, Rochester, New York 14650-2201 (US)
(72) Inventor: ROBISON, Gary, Lee, Rochester, NY 14618 (US)
(74) Representative: Blickle, K. Werner, Dipl.-Ing.
(86) International application number: US9005169
(87) International publication number: WO9104510

(56) References cited:
- WO-A-90/04214
- US-A- 4 811 042

## Description

### Technical Field

The invention is related to magnetic recording of scene-related parameters on film.

### Background Art

The ideal or nominal amount of light or exposure value for exposing a frame of film is specified by the speed, or ISO number, of the film. The camera (or photographer) determines from the ISO number of the film and from the brightness of the scene about to be photographed how much of the scene illumination to admit through the camera shutter onto the film to obtain the ideal exposure. Either the camera's aperture size or shutter exposure time or both must be adjusted to admit just the right amount of light onto the film. The amount of light is increased by increasing either the exposure time or the aperture size or both and is decreased by doing the opposite.

If the camera (or photographer) commits an error in determining the correct shutter exposure time and aperture size used to expose color negative film frame, the negative image on the film is either slightly washed out and of low contrast (in the case of underexposure) or has insufficient contrast between different objects in the image (in the case of an overexposure). The effect is sometimes unavoidable, particularly in cases of high speed photography wherein the shutter exposure time must be extremely short. If the photofinisher is aware of such an error, he can at least partially compensate by changing the amount of light used to expose the film image onto print paper. For example, an underexposed (thin) film negative image should be printed with a less print-exposure than normal. The problem is that, absent a skilled photofinishing operator or a sophisticated film image scanner such as those used in the Eastman Kodak Company CLAS 35 film printer, the photofinisher will not necessarily know that a particular film frame has been over- or underexposed.

A more severe problem is that the unusual darkness or lightness of a developed film image is not necessarily an indication of a camera exposure error because the actual scene luminance may have been abnormally dark or light, due to the objects in the scene being unusually light or dark.

In the prior art it has been at least suggested that various scene parameters be recorded on film. Reference U.S. patents 3,843,956; 4,001,846; 3,995,289 and 3,736,849. Specifically, exposure conditions have been suggested as being recorded optically on the film. The disadvantage here is that such information is not available until after the film is developed. Moreover, the information may not be supplemented, since it must be carefully optically recorded on the film using special exposure devices such as those found in some of the higher quality automatic cameras.

U.S. patent 4,811,042 describes a method in which a photographic print is marked to indicate that a corresponding film negative was purposely exposed in a camera at an operator-selected exposure different from an automatically supplied nominal exposure. The method includes recording data optically, mechanically or magnetically in association with a film frame indicative of the difference between the nominal and intentionally varied camera exposure values, and subsequently reading the data and marking either the back of a corresponding print or a transparency mount.

While it has been suggested to record various scene parameters such as shutter speed and aperture size, or a difference between nominal and intentionally varied exposure values, adjacent each frame on the film, it has not been suggested how to make such information meaningful to a photofinisher with respect to non-intentional camera exposure errors.

### Summary of the Invention

The present invention is advantageously employed in a photofinishing apparatus which processes a strip of developed photographic film having a magnetic layer therein. The photofinishing apparatus includes a print exposure source for exposing individual frames on said film onto individual frames on print paper, a print exposure value controller for controlling the amount of light with which said print exposure source exposes an individual frame of said film onto an individual frame on said print paper, and magnetic head means for reading data previously recorded in said magnetic layer. In accordance with the principles of the present invention, such photofinishing apparatus is provided with a processor. The processor includes means for reading through said magnetic head means data previously recorded in said magnetic layer relating to a camera exposure error and determining therefrom a difference between an ideal exposure value and an actual exposure value associated with said camera exposure error for an individual film frame. The processor further includes means for commanding the print exposure value controller to employ a print exposure value corresponding to a nominal print exposure value modified by an amount corresponding to said difference so as to compensate for said camera exposure error in making a print from said individual film frame. The resulting print exhibits a higher image quality than would otherwise be achieved using the nominal print exposure value.

In accordance with one aspect of the present invention, the processor reading means reads and distinguishes a recorded film speed value, scene brightness value, lens objective length, actual shutter exposure time, and actual aperture size for an individual film frame. The processor computes ideal exposure value from the read film speed value and scene brightness value. The actual exposure value resulting from the camera exposure error is computed by the processing means from the read lens objective length, actual shutter exposure time and actual aperture size.

In a preferred embodiment of the invention, the nominal print exposure value corresponds to a medium pixel density of the print paper. The print exposure value used to compensate for the camera exposure error equals the sum of said nominal print exposure value and the difference determined by the processing means.

The present invention also contemplates a method for compensating for an error in the camera exposure of an individual frame of a photographic film strip. The compensation occurs during photofinishing of said film strip frame. This method includes the steps of: conveying data relating to said error to photofinishing apparatus through a magnetic layer on the film strip; reading, distinguishing and processing the data to determine a difference between an ideal exposure value and an actual exposure value resulting from said camera exposure error; and exposing a developed image in an individual film frame onto photosensitive paper with a print exposure value corresponding to a nominal print exposure value modified by an amount corresponding to said difference.

### Brief Description of the Drawings

The invention is best understood by reference to the accompanying drawings, of which:
Fig. 1 is a simplified schematic block diagram illustrating a camera embodying one aspect of the invention;
Fig. 2 is a simplified schematic block diagram of photofinishing apparatus embodying another aspect of the invention;
Fig. 3 is a functional block diagram illustrating a processor in the photofinishing apparatus of Fig. 2;
Fig. 4 is a plan view of the parallel magnetic tracks in film employed in the camera of Fig. 1 and the photofinishing apparatus of Fig. 3; and
Fig. 5 is a cross-sectional view of the film of Fig. 4.

### Best Mode of Carrying Out the Invention

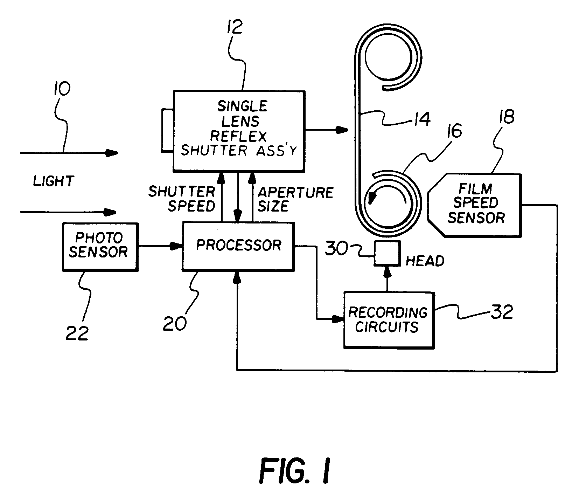

Referring to Fig. 1, light 10 reflected from a scene to be photographed enters a single lens reflex (SLR) shutter assembly 12. The SLR shutter assembly regulates the amount of the light 10 which reaches a strip of film 14 wrapped around a take-up reel 16. For this purpose, the SLR shutter assembly ambits light through an aperture characterized by a certain size, the aperture being open for a particular exposure time, the exposure time and aperture size together with the lens focal length determining the exposure value or amount of light reaching the film 14. The take-up reel 16 then rotates to bring the next frame of the film 14 into registration with the SLR shutter assembly 12 in preparation for the next exposure. A film speed sensor 18, using well-known techniques such as DX coding on the film cartridge, senses the film speed or ISO number of the film strip 14 and transmits this information to a processor 20. The processor 20 also receives a signal from a photosensor 22 representing the brightness of the light 10. The processor 20 determines the exposure time and aperture size for exposing the next frame of film from the scene brightness value received from the photosensor 22 and the film speed or ISO number received from the film speed sensor 18, using techniques well-known in the art. The processor 20 then transmits the exposure time and aperture size thus determined as servo commands to the SLR shutter assembly.

In the invention, the film 14 includes, as one of its layers, a virtually transparent magnetic material in which data may be magnetically recorded. To take advantage of this feature, the camera of Fig. 1 further includes a magnetic recording head 30 controlled by recording circuits 32. The processor 20 transmits data to the recording circuits 32 for recording on the film 14 through the head 30. In accordance with the invention, the processor 20 includes means for generating information upon which a photofinisher may rely in determining how to proceed in the development or printing of a particular one of the frames exposed on the film 14.

Referring to Fig. 1, the processor 20 is furnished with information characterizing the SLR shutter assembly 12, including the lens focal length F. Furthermore, the processor 20 receives signals representing the actual aperture size D as well as the actual shutter time T employed by the SLR shutter assembly 12 in exposing a current frame of the film 14. In addition, as described above in connection with Fig. 1, the processor 20 receives the film ISO number from the film speed sensor 18 and the scene brightness value from the photosensor 20. The processor 20 causes all these values to be recorded in a magnetic track in the film adjacent the current frame. The processor 20 transmits the foregoing information as encoded data to recording circuits 32 as the film 14 is wound on the take-up reel 16 to the next frame thereof so that the head 30 records this information in a magnetic track (or tracks) adjacent the current film frame in the magnetic layer.

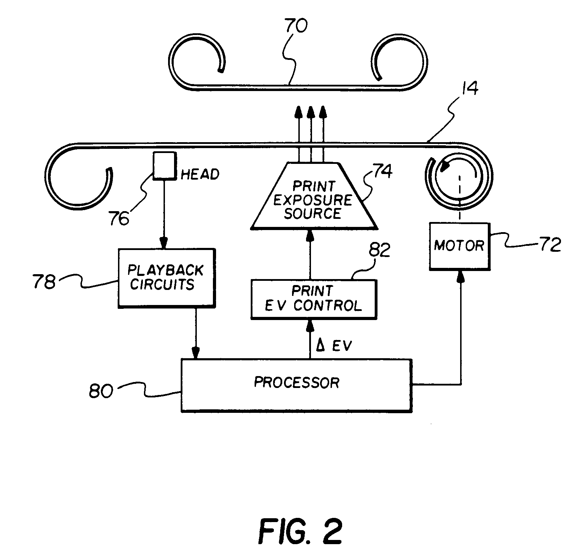

Referring to Fig. 2, a photofinishing system embodying the invention processes the film 14 exposed by the camera of Fig. 1 and a strip of photosensitive printing paper 70 using a film advance motor 72, a print exposure light source 74, a magnetic playback head 76 and playback circuits 78 connected thereto. The photofinishing system of Fig. 2 also includes a processor 80. As each frame on the film strip 14 is advanced past the magnetic playback head 76 in preparation for being exposed to the print exposure source 74, the processor decodes the signal received from the head 76 through the playback circuits 78 in order to read the recorded scene brightness value, the actual shutter exposure time and the actual aperture size. It may also read the camera lens focal length and the film speed (ISO number) if these were also recorded on the film.

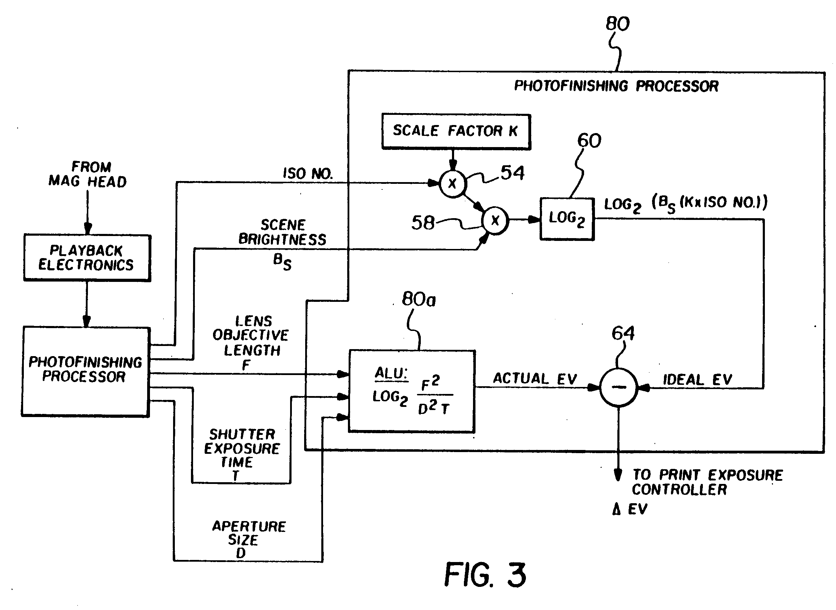

In the following discussion, the actual exposure value (sometimes abbreviated EV) is the amount of light to which a film frame (or print paper frame) is exposed and is defined as the base two logarithm of the square of the lens focal length divided by the product of the exposure time and the square of the aperture size. The ideal exposure value is defined as the base two logarithm of the product of the film ISO number, a scale factor and the scene brightness. The scale factor depends upon the units in which the scene brightness is measured. This latter definition defines the ideal exposure value or amount of light which the film ought to receive for a nominal exposure for ideal contrast and image quality. Any difference between the actual exposure value (computed from the shutter speed and aperture size selected by the camera) and the ideal exposure value (computed from the scene brightness and the film speed or ISO number) is measured by the photofinishing system processor of Fig. 3 and used to change the print exposure from a nominal value so as to compensate for the difference.

The processor 80 computes the ideal exposure value from the scene brightness value magnetically read from the film near the film frame about to be printed.

As indicated in the top of Fig. 3, the ISO number of the film is multiplied in a multiplier 54 by a scale factor K. (In accordance with well-known techniques, the scale factor K depends upon the units in which the film speed is specified and the units in which the scene brightness was measured.) The brightness value is multiplied in a multiplier 58 by the product computed by the multiplier 54. Arithmetic logic unit (ALU) 60 then computes the base two logarithm of the product produced by the multiplier 58, the result being the ideal exposure value with which the film should have been exposed. The processor 80 receives the actual aperture size D and the actual shutter time T (which the SLR shutter assembly employed in exposing the current film frame) from the magnetic head 76 through the playback electronics 78. The ALU 80a, as indicated in Fig. 3, computes the actual exposure value from the actual aperture size D and actual shutter time T employed by the camera of Fig. 1 and stores the actual exposure value in a buffer (not shown) associated with ALU 80a. The value stored in the buffer is the base two logarithm of the square of the lens focal length divided by the product of the actual shutter time and the square of the actual aperture size. The comparator 64 subtracts the actual exposure value stored in the buffer associated with ALU 80a from the ideal exposure value stored in the buffer (not shown) associated with ALU 60 to determine the exposure value deviation Δ. The photofinishing processor 80 transmits the magnitude and direction of the deviation Δ (between the actual exposure value and the ideal exposure value) to the print exposure controller 82 just as the current frame on the film 14 is transported past the head 76 in preparation for being exposed by the print exposure source 74. The print exposure controller 82 changes or adjusts the exposure value with which the print exposure source 74 exposes the print paper 70 from a nominal exposure value by an amount equal to (or proportional to) the magnitude of the exposure deviation Δ but by an opposite polarity. Thus, for a negative Δ (underexposed film), the print is exposed to less than the nominal amount of light, for example.
Such an adjustment at least partially compensates for the error in the camera exposure value.

One way of making such an adjustment is to select a nominal print exposure value EV₀ which is known to produce a gray level or pixel density in the print paper lying in the middle of the density range of the print paper, and simply add Δ to EV₀ to obtain the desired print exposure value.

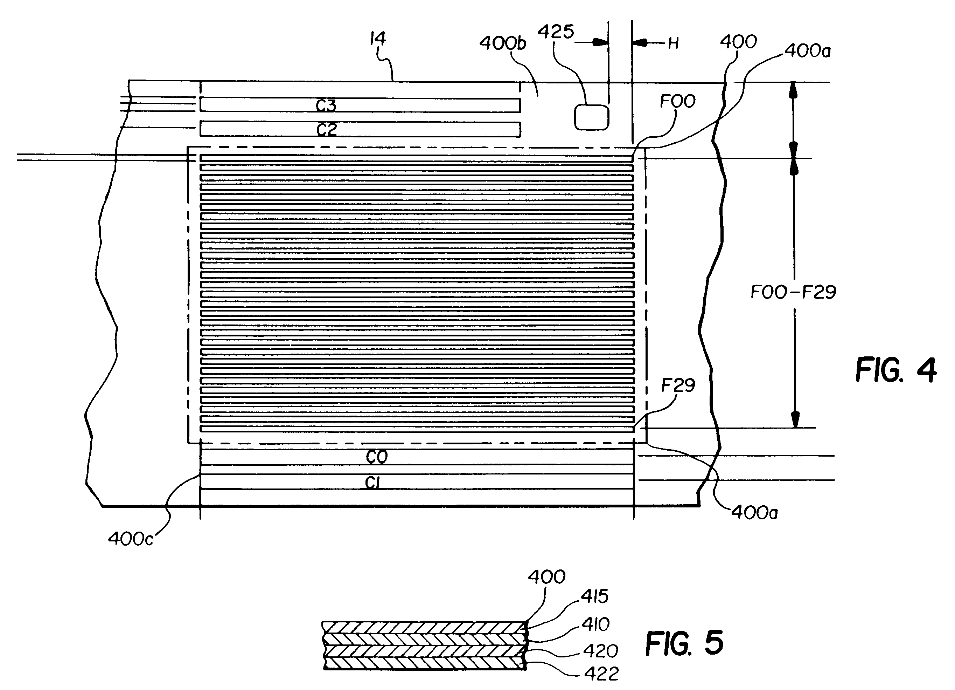

Referring to Fig. 4, the magnetic head 30 in the camera of Fig. 1 records data encoded by the camera processor 20 representing the scene brightness value, the shutter time and the aperture value for each film frame in predetermined ones of plural magnetic tracks C0-C3 or F00-F29 extending parallel with the length of the film 400 adjacent or within the frame 400a. In a preferred embodiment, the tracks C0-C3 would be employed for such recording, because these tracks lie outside of the image frame area 400a on the film 400. The advantage of such a choice is that the magnetic head 30 may be narrow enough so as to lie or contact only the peripheral film regions 400b, 400c, and thereby avoid the image frame area 400a. As shown in Fig. 5, film 400 typically includes a base 410, various well known photo-chemical layers 415 on one side of the base, and a virtually transparent magnetic layer 420 on the other side. An anti-static and lubrication layer 422 can overlie the magnetic layer 420. In one aspect of the invention, different ones of the plural tracks in Fig. 4 are dedicated to recording different types of information. Thus, the scene brightness value is always recorded in a particular one of the tracks C0-C3, so that the photofinishing apparatus may readily find it as it processes each frame while shutter speed, aperture size and other parameters are recorded in other tracks or in the same track. In another aspect of the invention, each of the tracks illustrated in Fig. 4 starts and stops within the length of the image frame 400a. In this way, the information magnetically recorded in connection with that frame is unambiguously associated with that frame by its location in the magnetic tracks adjacent that frame. In this aspect, the film 400, in addition to storing the photographic image, also functions in the manner of an X-Y addressable random access memory in which each frame is addressed by moving the film along the X direction, while the particular information type to be monitored is addressed by searching for the corresponding one of the parallel tracks in the Y direction. Thus, the photofinisher system need do very little searching to monitor all frames on the film 400 without interrupting the printing process to any significant degree.

While the invention has been described in detail with reference to a preferred embodiment thereof, it is understood that variations and modifications thereof may be made without departing from the scope of the invention as claimed.

## Claims

1. A photofinishing apparatus which processes a strip of developed photographic film (14) having a magnetic layer (420) therein and a strip of photosensitive print paper (70), said photofinishing apparatus comprising a print exposure source (74) for exposing individual frames on said film (14) onto individual frames on said print paper (70), a print exposure value controller (82) for controlling the amount of light with which said print exposure source (74) exposes an individual frame of said film (14) onto an individual frame on said print paper (70), and magnetic head means (76) for reading data previously recorded in said magnetic layer (420) of the photographic film (14) characterized by a processor (80) including:
means for reading through said magnetic head means (76) data previously recorded in said magnetic layer (420) relating to a camera exposure error, means for determining therefrom a difference between an ideal exposure value and an actual exposure value associated with said camera exposure error for an individual film frame; and
means for commanding said print exposure value controller (82) to employ a print exposure value corresponding to a nominal print exposure value modified by an amount corresponding to said difference so as to compensate for said camera exposure error in making a print from said individual film frame, whereby said print exhibits a higher image quality than would otherwise be achieved using the nominal print exposure value.

2. The photofinishing apparatus of claim 1 wherein:
said reading means of said processor (80) comprises means for reading and distinguishing between a recorded film speed value, scene brightness value, lens focal length, actual shutter exposure time, and actual aperture size for the individual film frame; and
said determining means of said processor (80) comprises means for computing said actual exposure value from the read lens focal length, actual shutter exposure time and actual aperture size, and means for computing said ideal exposure value from said read film speed value and scene brightness value.

3. The photofinishing apparatus of claim 2 wherein said nominal print exposure value corresponds to a medium pixel density in said print paper (70), and wherein said print exposure value equals the sum of said nominal print exposure value and said difference.

4. A method for compensating for an error in the camera exposure of an individual frame of a photographic film strip (14) during photofinishing of said film strip frame, comprising the steps of:
conveying data relating to said error to photofinishing apparatus through a magnetic layer (420) on the film strip (14);
reading, distinguishing and processing said data to determine a difference between an ideal exposure value and an actual exposure value resulting from said camera exposure error; and
exposing a developed image in said individual film frame onto photosensitive print paper (70) with a print exposure value corresponding to a nominal print exposure value modified by an amount corresponding to said difference.

## Patentansprüche

1. Fotofinishing-Gerät zur Verarbeitung eines eine Magnetschicht (420) aufweisenden entwickelten fotografischen Filmstreifens (14) und eines Fotopapierstreifens (70), wobei das Fotofinishing-Gerät eine Kopierlichtquelle (74) zum Aufbelichten einzelner Bildfelder des Films (14) auf einzelne Felder des Fotopapiers (70)aufweist sowie eine Kopierlichtwert-Steuerung (82) zum Steuern der Lichtmenge, mit der die Kopierlichtquelle (74) jeweils ein einzelnes Bildfeld des Films (14) auf ein einzelnes Feld des Fotopapiers (70) belichtet, und einen Magnetkopf (76) zum Auslesen von zuvor in der Magnetschicht (420) des fotografischen Films (14) aufgezeichneten Daten, **gekennzeichnet durch** einen Prozessor (80) mit
einer Einrichtung, die mit Hilfe des Magnetkopfs (76) zuvor in der Magnetschicht (420) aufgezeichnete, eine Filmfehlbelichtung in der Kamera kennzeichnende Daten liest, Mitteln, die aufgrund dieser Daten den Unterschied zwischen einem idealen Belichtungswert und einem tatsächlichen, der in der Kamera erfolgten Fehlbelichtung für ein bestimmtes Bildfeld des Films zugeordneten Belichtungswert bestimmen, und Mitteln, die die Kopierlichtwert-Steuerung (82) dazu veranlassen, einen Kopierlichtwert zugrunde zu legen, der einem Kopierlicht-Sollwert entspricht, der jedoch durch einen der vorgenannten Differenz entsprechenden Wert so modifiziert worden ist, daß er bei der Herstellung eines Prints des betreffenden Bildfeldes die in der Kamera erfolgte Filmfehlbelichtung kompensiert und ein Print ergibt, dessen Bildqualität höher ist, als dies bei Verwendung des Kopierlicht-Sollwertes erreichbar wäre.

2. Fotofinishing-Gerät nach Anspruch 1, dadurch gekennzeichnet, daß die in dem Prozessor (80) vorgesehene Leseeinrichtung aus Mitteln zum Erfassen und Identifizieren eines aufgezeichneten Filmempfindlichkeitswerts, eines Szenenhelligkeitswerts, der Brennweite des Objektivs, der tatsächlichen Belichtungszeit und des tatsächlichen Blendenwertes für das jeweilige Bildfeld des Films besteht und
die im Prozessor (80) vorgesehenen Bestimmungsmittel eine Einrichtung zum Bestimmen des tatsächlichen Belichtungswerts aus den für die Brennweite des Objektivs, die tatsächliche Belichtungszeit und die tatsächliche Blende erfaßten Werten sowie eine Einrichtung zum Bestimmen des idealen Belichtungswerts aus den für die Filmempfindlichkeit und Szenenhelligkeitswert erfaßten Werten umfassen.

3. Fotofinishing-Gerät nach Anspruch 2, dadurch gekennzeichnet, daß der Kopierlicht-Sollwert einer mittleren Pixel-Dichte des Fotopapiers (70) entspricht und der Kopierlichtwert gleich der Summe aus Kopierlicht-Sollwert und Differenz zwischen idealem und tatsächlichem Belichtungswert ist.

4. Verfahren zum Kompensieren einer in der Kamera erfolgten Fehlbelichtung eines einzelnen Bildfeldes eines fotografischen Filmstreifens (14) während der Verarbeitung des dieses Bildfeld enthaltenden Films im Fotofinishing-Labor, dadurch gekennzeichnet, daß in mehreren Arbeitsschritten
die Fehlbelichtung kennzeichnende Daten über eine auf dem Filmstreifen (14) befindliche Magnetschicht (420) dem Fotofinishing-Gerät übermittelt werden,
die Daten ausgelesen, identifiziert und verarbeitet werden, um eine Differenz zwischen einem idealen Belichtungswert und einem sich aus der Fehlbelichtung in der Kamera ergebenden tatsächlichen Belichtungswert zu ermitteln, und ein in dem betreffenden Feld des Films enthaltenes entwickeltes Bild auf Fotopapier (70) unter Verwendung eines Kopierlichtwertes belichtet wird, der einem Kopierlicht-Sollwert entspricht, jedoch mit einem der Differenz zwischen idealem und tatsächlichem Wert entsprechenden Wert modifiziert worden ist.

## Revendications

1. Appareil de traitement en laboratoire qui traite une bande de film photographique développé (14) ayant en elle une couche magnétique (420) et une bande de papier photosensible de tirage (70), ledit appareil de traitement en laboratoire comprenant une source d'exposition de tirage (74) pour exposer des vues individuelles sur ledit film (14) vers des plages individuelles sur ledit papier de tirage (70), un dispositif de commande d'indice de lumination (82) pour commander la quantité de lumière avec laquelle ladite source d'exposition de tirage (74) expose une vue individuelle dudit film (14) vers une plage individuelle sur ledit papier de tirage (70), et un dispositif magnétique de tête d'enregistrement (76) pour lire des données enregistrées préalablement dans ladite couche magnétique (420) du film photographique (14), caractérisé par un processeur (80) comprenant :
des moyens pour lire au moyen dudit dispositif de tête magnétique (76) des données enregistrées préalablement sur ladite couche magnétique (420) et relatives à une erreur d'exposition de l'appareil de prise de vues, des moyens pour en déduire, pour une vue individuelle du film, une différence entre un indice de lumination idéal et un indice de lumination réel associé à ladite erreur d'exposition de l'appareil de prise de vues ; et
des moyens pour commander audit dispositif de commande d'indice de lumination de tirage (82) d'employer un indice de lumination de tirage correspondant à un indice de lumination nominal de tirage modifié d'une quantité correspondant à ladite différence de manière à compenser ladite erreur d'exposition de l'appareil de prise de vues afin de réaliser un tirage à partir de ladite vue individuelle de film, le tirage résultant montrant une qualité d'image supérieure à celle qui aurait été obtenue autrement en utilisant l'indice de lumination nominal de tirage.

2. Appareil de traitement en laboratoire selon la revendication 1, dans lequel :
lesdits moyens de lecture dudit processeur (80) comprennent des moyens pour lire et identifier, pour chaque vue individuelle du film, une valeur enregistrée de sensibilité de film, une valeur de luminance de scène, une distance focale d'objectif, un temps réel de pose d'obturateur, et une ouverture réelle de diaphragme ; et
lesdits moyens de détermination dudit processeur (80) comprennent des moyens pour calculer ledit indice de lumination réel à partir des valeurs lues de distance focale d'objectif, de temps réel de pose d'obturateur et d'ouverture de diaphragme réelle, et des moyens pour calculer ledit indice de lumination idéal à partir desdites valeurs lues de sensibilité de film et de luminance de scène.

3. Appareil de traitement en laboratoire selon la revendication 2, dans lequel ledit indice de lumination nominal de tirage correspond à une densité de pixels moyenne dans ledit papier de tirage (70), et dans lequel ledit indice de lumination de tirage est égal à la somme dudit indice de lumination nominal de tirage et de ladite différence.

4. Procédé pour compenser une erreur d'exposition par un appareil de prise de vues d'une vue individuelle d'une bande de film photographique (14) pendant le traitement en laboratoire de ladite vue de bande de film, comprenant les étapes suivantes :
véhiculer des données relatives à ladite erreur vers l'appareil de traitement en laboratoire au moyen d'une couche magnétique (420) sur la bande de film (14) ;
lire, identifier et traiter lesdites données pour déterminer une différence entre un indice de lumination idéal et un indice de lumination réel résultant de ladite erreur d'exposition d'appareil de prise de vues ; et
exposer une image développée dans ladite vue individuelle de film sur un papier photosensible de tirage (70) avec un indice de lumination de tirage correspondant à un indice de lumination de tirage nominal modifié d'une quantité correspondant à ladite différence.
